# EUROPEAN PATENT APPLICATION

(11) **EP 4 725 596 A1**
(43) Date of publication of application: **15.04.2026**
(21) Application number: 24839325.8
(22) Date of filing: 22.05.2024
(51) Int. Cl.: B01J 29/83, B01D 53/94, F01N 3/08, F01N 3/28

(54) **EXHAUST GAS PURIFYING CATALYST AND HYDROCARBON ADSORBENT**

(30) Priority: 11.07.2023 JP 2023113569
(71) Applicant: CATALER CORPORATION, Kakegawa-shi, Shizuoka 437-1492 (JP)
(72) Inventor: KAWAKAMI, Yuki, Kakegawa-shi, Shizuoka 437-1492 (JP); SUGIOKA, Daisuke, Kakegawa-shi, Shizuoka 437-1492 (JP); YOKOI, Toshiyuki, Yokohama-shi, Kanagawa 226-8501 (JP); LU, Yao, Yokohama-shi, Kanagawa 226-8501 (JP)
(74) Representative: Kramer Barske Schmidtchen Patentanwälte PartG mbB
(86) International application number: PCT/JP2024/018762
(87) International publication number: WO 2025/013428

(57) **Abstract**

According to the present invention, an exhaust gas purifying catalyst with high HC purifying performance at cold start after hydrothermal enduring is provided. The exhaust gas purifying catalyst disclosed herein includes a base material and an exhaust gas purifying layer provided on the base material. The exhaust gas purifying layer includes a catalyst metal and a molecular sieve that does not substantially contain Si as a hydrocarbon adsorption material. The molecular sieve that does not substantially contain Si is an aluminophosphate molecular sieve including a 12-membered ring. The crystallite diameter of the aluminophosphate molecular sieve that is determined by X-ray diffraction measurement is 360 Å to 700 Å.

## Description

### [Technical Field]

The present invention relates to an exhaust gas purifying catalyst. The present invention also relates to a hydrocarbon adsorption material suitable for the exhaust gas purifying catalyst. It should be noted that the present application claims priority based on Japanese Patent Application No. 2023-113569 filed on July 11, 2023, the entire contents of which application are incorporated herein by reference.

### [Background Art]

The exhaust gas emitted from an internal-combustion engine such as a vehicle engine includes harmful components such as hydrocarbon (HC), carbon monoxide (CO), and nitrogen oxide (NOx). For efficient reaction and removal of these harmful components from the exhaust gas, exhaust gas purifying catalysts have been used conventionally. In one typical structure of the exhaust gas purifying catalyst, a catalyst layer containing a catalyst metal such as platinum (Pt), palladium (Pd), or rhodium (Rh) is formed on a base material with high heat resistance, such as ceramics.

In a state in which the exhaust gas purifying catalyst is not sufficiently heated immediately after an engine is started (so-called cold start), the temperature of the exhaust gas purifying catalyst is so low that the catalyst activity enough to treat hydrocarbon (HC) is not easily obtained. In view of this, an HC adsorption type exhaust gas purifying catalyst in which a catalyst layer containing a catalyst metal is stacked on an HC adsorption layer containing an HC adsorption material has been developed (for example, see Patent Literatures 1 to 4). As the HC adsorption material, a molecular sieve such as zeolite has been known as described in Patent Literatures 1 to 4.

### [Citation List]

### [Patent Literatures]

[Patent Literature 1] Japanese Patent Application Publication No. H7-256114
[Patent Literature 2] Japanese Patent Application Publication No. 2009-167973
[Patent Literature 3] Japanese Patent Application Publication No. 2004-116331
[Patent Literature 4] Japanese Translation of PCT International Application Publication No. 2020-510519

### [Summary of Invention]

### [Technical Problem]

In recent years, because of stricter restriction of the exhaust gas, it has been demanded for the exhaust gas purifying catalyst to have a higher performance of removing the harmful components included in the exhaust gas. For example, the higher exhaust gas purifying performance at the cold start has been demanded. As a result of the earnest examinations, the present inventors have found that the exhaust gas purifying catalyst in the conventional art has a problem in that the HC purifying performance at the cold start deteriorates largely after the long exposure to the high-temperature exhaust gas containing water (hereinafter this exposure is called "after hydrothermal enduring").

The present invention has been made in view of the above circumstances, and an object thereof is to provide an exhaust gas purifying catalyst with high HC purifying performance at cold start after hydrothermal enduring.

### [Solution to Problem]

As a result of the present inventors' earnest examination, it has been found out that the purifying performance of the exhaust gas purifying catalyst in the aforementioned conventional art using zeolite largely decreases after the hydrothermal enduring because Si contained in the zeolite (aluminosilicate) transfers during the hydrothermal enduring and such Si has an adverse influence on a precious metal, which is the catalyst metal. Moreover, it has been discovered that using a molecular sieve that does not substantially contain Si at a predetermined proportion or more as an HC adsorption material leads to the sudden increase of the HC purifying performance of the exhaust gas purifying catalyst at the cold start after the hydrothermal enduring. As a result of further earnest examination, the present inventors have also found out that using, among the molecular sieves that do not substantially contain Si, an aluminophosphate molecular sieve including a 12-membered ring and having a crystallite diameter of 360 Å to 700 Å drastically increases the HC purifying performance of the exhaust gas purifying catalyst at the cold start after the hydrothermal enduring.

That is to say, an exhaust gas purifying catalyst [1] disclosed herein includes a base material and an exhaust gas purifying layer provided on the base material. The exhaust gas purifying layer includes a catalyst metal and a molecular sieve that does not substantially contain Si as a hydrocarbon adsorption material. The molecular sieve that does not substantially contain Si is an aluminophosphate molecular sieve including a 12-membered ring. A crystallite diameter of the aluminophosphate molecular sieve that is determined by X-ray diffraction measurement is 360 Å to 700 Å. By such a structure, the exhaust gas purifying catalyst with the high HC purifying performance at the cold start after the hydrothermal enduring can be provided.

An exhaust gas purifying catalyst [2] disclosed herein is the exhaust gas purifying catalyst [1], in which the crystallite diameter of the aluminophosphate molecular sieve is 360 Å to 400 Å. By such a structure, the exhaust gas purifying catalyst is excellent in production efficiency.

An exhaust gas purifying catalyst [3] disclosed herein is the exhaust gas purifying catalyst [1], in which the crystallite diameter of the aluminophosphate molecular sieve is 450 Å to 600 Å. By such a structure, the exhaust gas purifying catalyst is excellent in the balance between the production efficiency and the HC adsorption capability.

An exhaust gas purifying catalyst [4] disclosed herein is any of the exhaust gas purifying catalysts [1] to [3], in which a framework structure of the aluminophosphate molecular sieve is an AFI type. Such a structure is advantageous in the above-mentioned HC purifying performance of the exhaust gas purifying catalyst.

An exhaust gas purifying catalyst [5] disclosed herein is any of the exhaust gas purifying catalysts [1] to [4], in which the exhaust gas purifying layer includes an HC adsorption layer containing the molecular sieve that does not substantially contain Si, and a catalyst layer containing the catalyst metal. Such a structure is advantageous in the above-mentioned HC purifying performance of the exhaust gas purifying catalyst.

An exhaust gas purifying catalyst [6] disclosed herein is the exhaust gas purifying catalyst [5], in which the HC adsorption layer and the catalyst layer are stacked and the HC adsorption layer exists on a side of the base material relative to the catalyst layer. Such a structure is particularly advantageous in the above-mentioned HC purifying performance of the exhaust gas purifying catalyst.

An exhaust gas purifying catalyst [7] disclosed herein is the exhaust gas purifying catalyst [6], in which a first part catalyst layer and a second part catalyst layer are stacked in the catalyst layer. The first part catalyst layer exists on the side of the base material relative to the second part catalyst layer. Each of the first part catalyst layer and the second part catalyst layer contains the catalyst metal. The first part catalyst layer includes an oxidation catalyst as the catalyst metal. The second part catalyst layer includes a reduction catalyst as the catalyst metal. Such a structure is extremely advantageous in the above-mentioned HC purifying performance of the exhaust gas purifying catalyst.

In another aspect, a hydrocarbon adsorption material [8] disclosed herein includes an aluminophosphate molecular sieve. The aluminophosphate molecular sieve includes a 12-membered ring. A crystallite diameter of the aluminophosphate molecular sieve that is determined by X-ray diffraction measurement is 360 Å to 700 Å. By such a structure, the amount of HC adsorption of the hydrocarbon adsorption material is large even after the hydrothermal enduring. Therefore, in the case of forming the exhaust gas purifying catalyst using the hydrocarbon adsorption material disclosed herein, the HC purifying performance at the cold start after the hydrothermal enduring is high.

### [Brief Description of Drawings]

Fig. 1 is a schematic view of an exhaust gas purifying system according to a first embodiment.
Fig. 2 is a perspective view schematically illustrating an exhaust gas purifying catalyst in Fig. 1.
Fig. 3 is a partial cross-sectional view where the exhaust gas purifying catalyst in Fig. 1 is cut in a cylinder axis direction.
Fig. 4A is a schematic view of an AFI type framework structure and Fig. 4B is a conceptual schematic view of the AFI type framework structure at a crystal grain boundary.
Fig. 5A is a schematic view illustrating one primary particle of an ALPO molecular sieve with large crystallite diameter, and Fig. 5B is a schematic view illustrating one crystallite in the one primary particle.
Fig. 6A is a schematic view illustrating one primary particle of an ALPO molecular sieve with small crystallite diameter, and Fig. 6B is a schematic view illustrating four crystallites in the one primary particle.
Fig. 7 is a partial cross-sectional view illustrating a structure of a modification of the exhaust gas purifying catalyst in Fig. 1.
Fig. 8 is a partial cross-sectional view where an exhaust gas purifying catalyst in a second embodiment is cut in the cylinder axis direction.
Fig. 9 is a partial cross-sectional view where an exhaust gas purifying catalyst in a third embodiment is cut in the cylinder axis direction.
Fig. 10 is a graph showing the amount of decane adsorption (mg/g) after hydrothermal enduring of an ALPO molecular sieve in each of Examples and Comparative Examples.
Fig. 11 is a graph showing HC 50% purifying temperature (°C) after the hydrothermal enduring of the exhaust gas purifying catalyst in each of Examples and Comparative Examples.
Fig. 12 is a graph showing HC emission (mg/km) in a cold range in a vehicle test for the exhaust gas purifying catalyst in each of Examples and Comparative Examples.

### [Description of Embodiments]

### [First embodiment]

Preferred embodiments of the present invention will be described below with reference to the drawings. It should be noted that matters not specifically mentioned in the description but required for carrying out the present invention can be understood as matters of design of a person skilled in the art based on related art in the field. The present invention can be carried out on the basis of the contents disclosed in the description and common general knowledge in the field. In the drawings below, the members and parts with the same operation are denoted with the same reference symbols and the overlapping description may be omitted or simplified. The dimensional relationships (e.g., length, width, and thickness) in each drawing do not necessarily reflect actual dimensional relationships. In the present specification, the expression "A to B" (where A and B are any numerical values) representing a range herein includes "preferably greater than A" and "preferably less than B" as well as "A or more and B or less".

### <<Exhaust gas purifying system>>

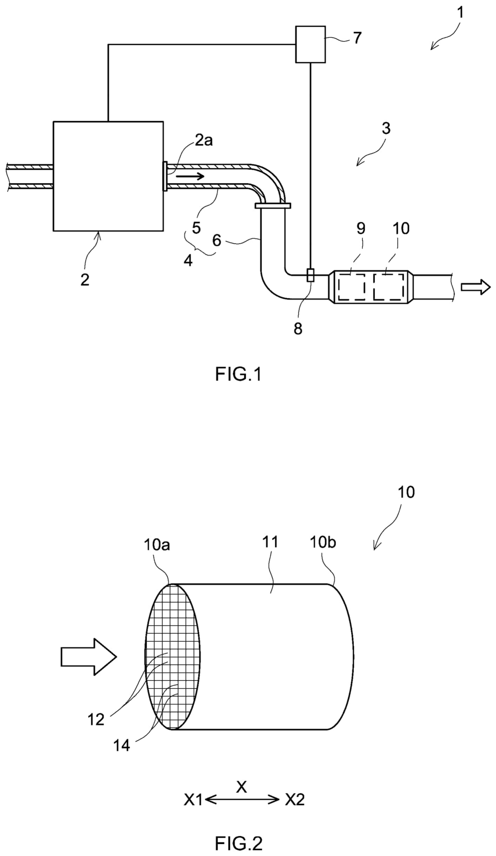

Fig. 1 is a schematic view of an exhaust gas purifying system 1. The exhaust gas purifying system 1 includes an internal-combustion engine (engine) 2, an exhaust gas purifying device 3, and an engine control unit (ECU) 7. The exhaust gas purifying system 1 is configured to purify a harmful component in the exhaust gas emitted from the internal-combustion engine 2, such as HC, CO, or NOx, in the exhaust gas purifying device 3. It should be noted that an arrow in Fig. 1 indicates a flowing direction of the exhaust gas. In the description below, along the flow of the exhaust gas, the side closer to the internal-combustion engine 2 is referred to as an upstream side and the side farther from the internal-combustion engine 2 is referred to as a downstream side.

The internal-combustion engine 2 is configured here using a gasoline engine of a gasoline vehicle as a main body. However, the internal-combustion engine 2 may alternatively be an engine other than the gasoline engine, for example, a diesel engine, an engine mounted on a hybrid vehicle, or the like. The internal-combustion engine 2 includes a combustion chamber (not illustrated). The combustion chamber is connected to a fuel tank (not illustrated). The fuel tank stores gasoline here. However, the fuel to be stored in the fuel tank may alternatively be diesel fuel (light oil) or the like. In the combustion chamber, the fuel supplied from the fuel tank is mixed with oxygen and combusted. Thus, combustion energy is converted into mechanical energy. The combustion chamber communicates with an exhaust port 2a. The exhaust port 2a communicates with the exhaust gas purifying device 3. The combusted fuel gas turns into the exhaust gas, which is then emitted to the exhaust gas purifying device 3.

The exhaust gas purifying device 3 includes an exhaust path 4 that communicates with the internal-combustion engine 2, a pressure sensor 8, a first catalyst 9, and a second catalyst 10. The exhaust path 4 is an exhaust gas flow channel where the exhaust gas flows. The exhaust path 4 includes an exhaust manifold 5 and an exhaust pipe 6 here. An upstream end part of the exhaust manifold 5 is connected to the exhaust port 2a of the internal-combustion engine 2. A downstream end part of the exhaust manifold 5 is connected to the exhaust pipe 6. In the middle of the exhaust pipe 6, the first catalyst 9 and the second catalyst 10 are disposed in this order from the upstream side. However, the arrangement of the first catalyst 9 and the second catalyst 10 may be arbitrarily changed. Moreover, the number of first catalysts 9 and the number of second catalysts 10 are not limited in particular and each of them may be more than one. Furthermore, a third catalyst may be disposed on the downstream side of the second catalyst 10.

The first catalyst 9 may be similar to the conventional one, and is not limited in particular. The first catalyst 9 may be, for example, a diesel particulate filter (DPF) that removes PM included in the exhaust gas, a diesel oxidation catalyst (DOC) that purifies HC or CO included in the exhaust gas, a three-way catalyst that purifies HC, CO, and NOx included in the exhaust gas at the same time, a NOx storage-reduction (NSR) catalyst that stores NOx in the normal driving (under a lean condition) and purifies NOx using HC or CO as a reducing agent when a little more fuel is injected (under a rich condition), or the like. The first catalyst 9 may have a function of increasing the temperature of the exhaust gas that flows into the second catalyst 10, for example. It should be noted that the first catalyst 9 is not an essential component and can be omitted in another embodiment.

The second catalyst 10 has a function of purifying the harmful components (for example, HC) in the exhaust gas. The second catalyst 10 is a three-way catalyst here. The second catalyst 10 is one example of the exhaust gas purifying catalyst disclosed herein. It should be noted that the second catalyst 10 may be referred to as "the exhaust gas purifying catalyst" below. The structure of the second catalyst (exhaust gas purifying catalyst) 10 will be described in detail below.

The ECU 7 controls the internal-combustion engine 2 and the exhaust gas purifying device 3. The ECU 7 is electrically connected to the internal-combustion engine 2 and a sensor (for example, the pressure sensor 8, a temperature sensor, an oxygen sensor, or the like) disposed at each part of the exhaust gas purifying device 3. It should be noted that the structure of the ECU 7 may be similar to the conventional structure without particular limitations. The ECU 7 is, for example, a processor or an integrated circuit. The ECU 7 includes an input port (not shown) and an output port (not shown). The ECU 7 receives, for example, information about the operation state of the vehicle and the amount, the temperature, the pressure, and the like of the exhaust gas emitted from the internal-combustion engine 2. The ECU 7 receives information detected by the sensor (for example, the pressure measured by the pressure sensor 8) through the input port. The ECU 7 transmits a control signal through the output port on the basis of the received information, for example. The ECU 7 controls the operation, for example, controls the fuel injection or ignition of the internal-combustion engine 2 and controls to regulate the amount of intake air. The ECU 7 controls the driving and stopping of the exhaust gas purifying device 3 on the basis of the operation state of the internal-combustion engine 2 and the amount of the exhaust gas emitted from the internal-combustion engine 2, for example.

### <<Exhaust gas purifying catalyst>>

Fig. 2 is a perspective view schematically illustrating the exhaust gas purifying catalyst 10. It should be noted that an arrow in Fig. 2 indicates the flow of the exhaust gas. In Fig. 2, the upstream side of the exhaust path 4, which is relatively close to the internal-combustion engine 2, is expressed on the left side and the downstream side of the exhaust path, which is relatively far from the internal-combustion engine 2, is expressed on the right side. Moreover, in Fig. 2, reference symbol X denotes a cylinder axis direction of the exhaust gas purifying catalyst 10. The exhaust gas purifying catalyst 10 is disposed in the exhaust path 4 so that the cylinder axis direction X extends along the flowing direction of the exhaust gas. The cylinder axis direction X is the flowing direction of the exhaust gas. In the description below, in the cylinder axis direction X, one direction X1 may be referred to as the upstream side (also referred to as exhaust gas inflow side or front side) and the other direction X2 may be referred to as the downstream side (also referred to as exhaust gas outflow side or rear side). However, these are merely the directions for the convenience of description and will not limit the mode of installing the exhaust gas purifying catalyst 10.

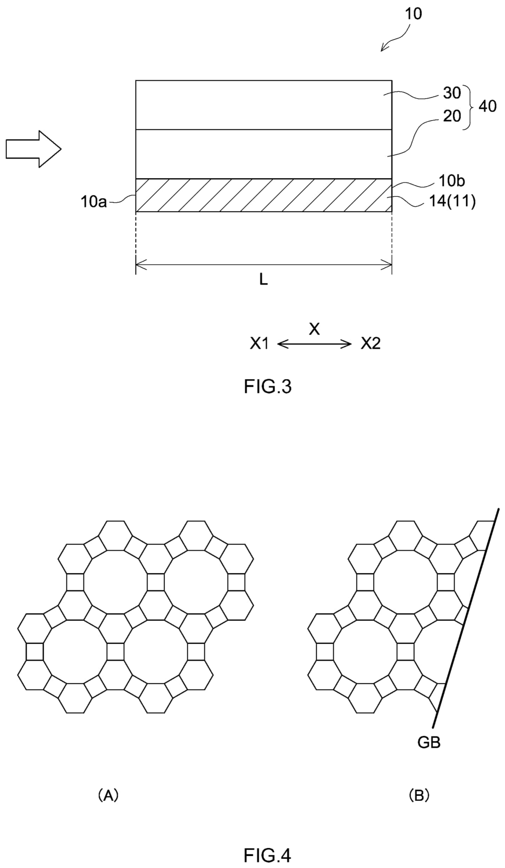

As illustrated in Fig. 3, the exhaust gas purifying catalyst 10 includes a base material 11 with a straight flow structure and an exhaust gas purifying layer 40. An end part of the exhaust gas purifying catalyst 10 in one direction X1 is an inlet 10a of the exhaust gas and an end part thereof in the other direction X2 side is an outlet 10b of the exhaust gas. The outer shape of the exhaust gas purifying catalyst 10 is circular cylindrical here. However, the outer shape of the exhaust gas purifying catalyst 10 is not limited in particular and may be, for example, an elliptical cylindrical shape, a polygonal cylindrical shape, a pipe-like shape, a foam-like shape, a pellet shape, a fibrous shape, or the like.

The base material 11 forms the frame of the exhaust gas purifying catalyst 10. The base material 11 is not particularly limited and various materials and various modes that have conventionally been employed in this type of applications can be used. The base material 11 may be, for example, a ceramic carrier formed of ceramic such as cordierite, aluminum titanate, or silicon carbide, or a metal carrier formed of stainless steel (SUS), Fe-Cr-Al-based alloy, Ni-Cr-Al-based alloy, or the like. As shown in Fig. 2, the base material 11 has a honeycomb structure here. The base material 11 includes a plurality of cells (cavities) 12 arrayed regularly in the cylinder axis direction X, and partition walls (ribs) 14 that section the cells 12. Although there is no particular limitation, the volume of the base material 11 (the apparent volume including the capacity of the cells 12) may be about 0.1 to 10 L, and for example 0.5 to 5 L. In addition, an average length (entire length) L of the base material 11 along the cylinder axis direction X may be generally 10 to 500 mm, for example 50 to 300 mm.

The cell 12 serves as a flow channel for the exhaust gas. The cell 12 extends in the cylinder axis direction X. The cell 12 is a penetration hole penetrating the base material 11 in the cylinder axis direction X. The shape, the size, the number, and the like of the cells 12 may be designed in consideration of, for example, the flow rate, the component, and the like of the exhaust gas flowing in the exhaust gas purifying catalyst 10. The shape of the cross section of the cell 12 that is orthogonal to the cylinder axis direction X is not limited in particular. The cross-sectional shape of the cell 12 may be, for example, a tetragon such as a square, a parallelogram, a rectangle, or a trapezoid, another polygon (such as a triangle, a hexagon, or an octagon), a wavy shape, a circular shape, or various other geometric shapes. The partition wall 14 faces the cell 12 and sections between the adjacent cells 12. Although not particularly limited, the average thickness of the partition wall 14 (the size in a direction orthogonal to the surface, this definition similarly applies to the description below) may be generally 0.1 to 10 mil (1 mil is equal to about 25.4 µm) and for example, 0.2 to 5 mil from the viewpoint of improving the mechanical strength, the viewpoint of reducing the pressure loss, or the like. The partition wall 14 may be porous so that the exhaust gas can pass therethrough.

Fig. 3 is a partial cross-sectional view schematically illustrating a part of a cross-section of the exhaust gas purifying catalyst 10 taken along the cylinder axis direction X. As illustrated in Fig. 3, the exhaust gas purifying layer 40 is provided on this base material 11, and the exhaust gas purifying layer 40 includes a hydrocarbon (HC) adsorption layer 20 and a catalyst layer 30. Therefore, the HC adsorption layer 20 and the catalyst layer 30 are stacked on the base material 11. In this manner, the exhaust gas purifying layer 40 is composed of layers involved in the purification of the exhaust gas.

The HC adsorption layer 20 is disposed on the base material 11 side (that is, on a lower layer side) relative to the catalyst layer 30. When the HC adsorbed in the HC adsorption layer 20 is desorbed from the HC adsorption layer 20, such arrangement allows the catalyst layer 30 to efficiently remove the HC.

The exhaust gas purifying layer 40 contains a catalyst metal and a molecular sieve that does not substantially contain Si as a hydrocarbon (HC) adsorption material. In this embodiment, in the exhaust gas purifying layer 40, the HC adsorption layer 20 contains the molecular sieve that does not substantially contain Si, which is the hydrocarbon (HC) adsorption material, and the catalyst layer 30 contains the catalyst metal.

In this specification, "the molecular sieve does not substantially contain Si" means that the proportion of Si atoms to all the atoms constituting the molecular sieve is 6 atom% or less (preferably, 3 atom% or less, more preferably 1 atom% or less, and still more preferably 0 atom%). Therefore, for example, the molecular sieve may contain Si due to the transfer of Si, inevitable impurities, or the like. It should be noted that the proportion of the Si atoms to all the atoms constituting the molecular sieve can be determined by X-ray fluorescence (XRF).

In this embodiment, an aluminophosphate (ALPO) molecular sieve with a 12-membered ring is used as the molecular sieve that does not substantially contain Si. The ALPO molecular sieve can be aluminophosphate (AlPO₄) with a framework structure that is the same as, similar to, or different from that of zeolite. The ALPO molecular sieve does not substantially contain Si but a SiO₂/Al₂O₃ ratio (molar ratio) of the ALPO molecular sieve is preferably less than 1, more preferably 0.5 or less, still more preferably 0.1 or less, and the most preferably 0. Since the ALPO molecular sieve used here does not substantially contain Si, this ALPO molecular sieve is different from aluminophosphate-based zeolite with the increased content ratio of Al₂O₃ to SiO₂ (the SiO₂/Al₂O₃ ratio is normally 1 or more even in low-silica zeolite). It should be noted that the SiO₂/Al₂O₃ ratio can be determined by X-ray fluorescence (XRF).

The framework structure of the ALPO molecular sieve to be used is not limited in particular as long as having the 12-membered ring. Examples of the framework structure having the 12-membered ring include, as the framework type codes defined by International Zeolite Association (IZA), AFI, AFR, AFS, AFY, ATO, ATS, BEA, CON, DFO, EZT, FAU, LTL, MOR, OSI, SAF, SBE, SBS, SBT, SFO, and the like. The framework structure is preferably AFI. The maximum number of members of the ring in the ALPO molecular sieve with the 12-membered ring is typically 12.

In addition, in this embodiment, the crystallite diameter of ALPO having the 12-membered ring is 360 Å to 700 Å.

In the conventional art, the molecular sieve such as zeolite is used as the HC adsorption material. Zeolite is crystalline aluminosilicate functioning as the molecular sieve, and thus contains Si and Al. According to the knowledge obtained as a result of the present inventors' examination, performing a hydrothermal enduring process on the catalyst layer containing zeolite causes Si in zeolite to transfer, resulting in the adverse influence on the precious metal, which is the catalyst metal. This leads to the decrease in the exhaust gas purifying performance at the cold start. It is considered that this is because SiO₂ contained in zeolite is reduced to SiO in a high-temperature reducing atmosphere, which results in the interface transfer or transpiration in the form of SiOx. In addition, the toxification due to interaction between Si and the precious metal is also considered.

Therefore, in this embodiment, by using the molecular sieve that does not substantially contain Si as the HC adsorption material, the HC purifying performance at the cold start even after the hydrothermal enduring is increased.

Moreover, it has been known that the ALPO molecular sieve can be used as the HC adsorption material. In this embodiment, the ALPO molecular sieve with the 12-membered ring is used as the ALPO molecular sieve. By allowing the framework structure of the ALPO molecular sieve to have the 12-membered ring, HC can be adsorbed efficiently and the HC purifying performance after the hydrothermal enduring becomes remarkably high.

Here, the AFI type framework structure, which is one framework structure of the ALPO molecular sieve with the 12-membered ring, is illustrated in Fig. 4A. As illustrated in Fig. 4A, the AFI type framework structure is formed by continuous structures in which four-membered rings and six-membered rings surround the 12-membered rings. Fig. 4B is a conceptual schematic view of the AFI type framework structure at a crystal grain boundary GB. As illustrated in Fig. 4B, at the crystal grain boundary GB, the structures in which the four-membered rings and the six-membered rings surround the 12-membered rings cannot be kept and a lattice defect is generated. In particular, since the 12-membered ring that easily adsorbs HC is large, the 12-membered ring easily has the lattice defect at the crystal grain boundary. The portion where this lattice defect is generated cannot contribute to the HC adsorption. It should be noted that since Fig. 4B is the conceptual view, the structure of the ring in the portion with the lattice defect is not illustrated exactly.

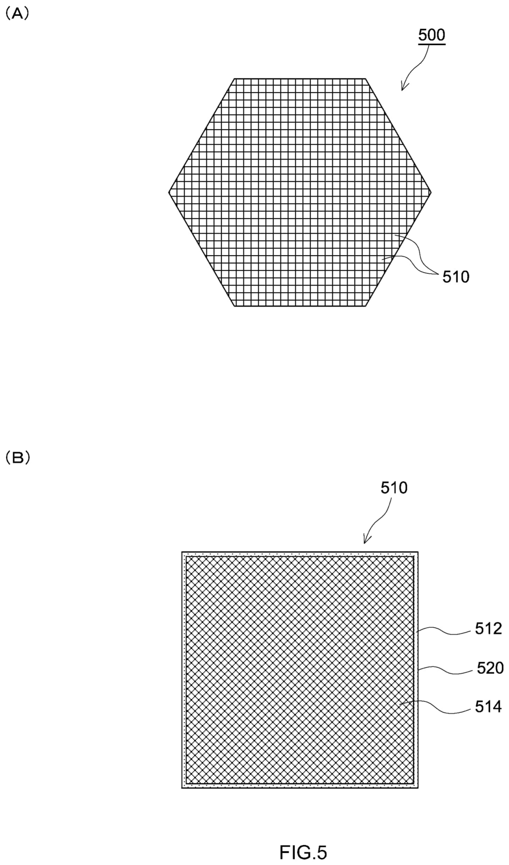

Moreover, Fig. 5A is a schematic view illustrating one primary particle 500 of the ALPO molecular sieve with the large crystallite diameter. The primary particle 500 of the ALPO molecular sieve has a hexagonal columnar shape, and Fig. 5A illustrates a face of a hexagon of the hexagonal columnar shape. In Fig. 5A, a tetragon within the contour of this hexagon represents each crystallite 510.

Fig. 5B is a schematic view illustrating the crystallite 510 of the primary particle 500 in Fig. 5A. Fig. 5B illustrates one crystallite 510. In Fig. 5B, at a crystal grain boundary 520, a region 512 where the lattice defect is generated is shown by a dot-hatch pattern and a region 514 where the lattice defect is not generated is shown by a mesh pattern. The region 512 where the lattice defect is generated cannot contribute to the HC adsorption. It should be noted that since these are schematic views, the primary particles 500 and the crystallites 510 of the ALPO molecular sieve are illustrated in the simplified manner.

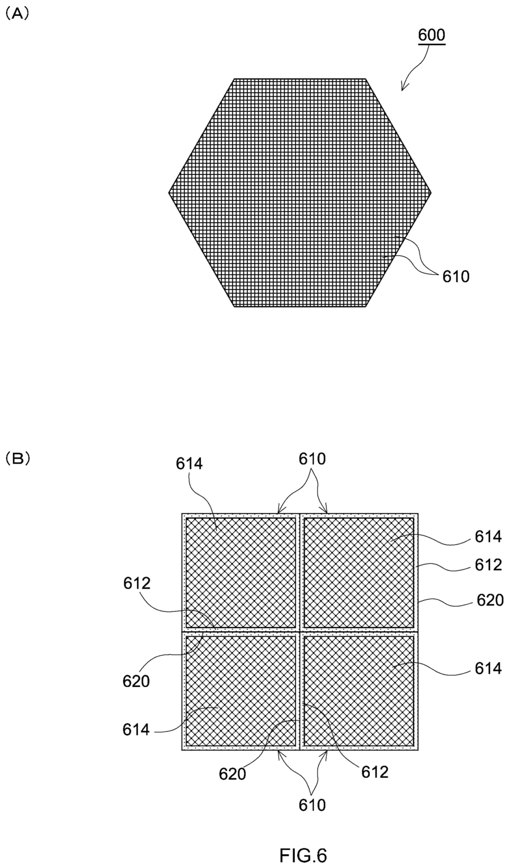

On the other hand, Fig. 6A is a schematic view illustrating one primary particle 600 of the ALPO molecular sieve with the small crystallite diameter. In Fig. 6A, a tetragon within the contour of this hexagon also represents each crystallite 610. The size of the crystallite 610 (that is, the crystallite diameter) in Fig. 6A is smaller than the size of the crystallite 510 in Fig. 5A.

Fig. 6B is a schematic view illustrating the crystallites 610 of the primary particle 600 in Fig. 6A. Fig. 6B depicts four crystallites 610 and these four crystallites 610 have the same size as one crystallite 510 in Fig. 5B. In Fig. 6B, moreover, at a crystal grain boundary 620, a region 612 where the lattice defect is generated is shown by a dot-hatch pattern and a region 614 where the lattice defect is not generated is shown by a mesh pattern. The region 612 where the lattice defect is generated cannot contribute to the HC adsorption. It should be noted that since these are schematic views, the primary particles 600 and the crystallites 610 of the ALPO molecular sieve are illustrated in the simplified manner.

Here, comparing Fig. 5B and Fig. 6B indicates that Fig. 6B additionally has the crystal grain boundary 620 with the cross-shape, and its vicinity additionally includes the region 612 where the lattice defect is generated. Therefore, the comparison between Fig. 5B and Fig. 6B reveals that the region that cannot contribute to the HC adsorption increases per unit area as the crystallite diameter of the primary particle is smaller. That is to say, it is understood that as the crystallite diameter is larger, the region that cannot contribute to the HC adsorption per unit area is smaller.

Therefore, in this embodiment, by allowing the crystallite diameter of the ALPO having the 12-membered ring to be 360 Å or more, the region that cannot contribute to the HC adsorption can be reduced sufficiently and the HC purifying performance after the hydrothermal enduring can be increased more remarkably. On the other hand, it is difficult to manufacture ALPO whose crystallite diameter is more than 700 Å. From the viewpoint of ease of manufacture, the crystallite diameter of the ALPO is preferably 600 Å or less, more preferably 550 Å or less, still more preferably 500 Å or less, and particularly preferably 400 Å or less. Therefore, when the crystallite diameter of the ALPO having the 12-membered ring is 360 Å to 400 Å, the production efficiency of the exhaust gas purifying catalyst 10 is excellent. On the other hand, the HC adsorbing capability is higher as the crystallite diameter of ALPO is larger. From the viewpoint of the HC adsorbing capability, the crystallite diameter of the ALPO having the 12-membered ring is preferably 380 Å or more, more preferably 450 Å or more, still more preferably 480 Å or more, and particularly preferably 500 Å or more. From the viewpoint of the balance between the production efficiency and the HC adsorbing capability, the crystallite diameter of the ALPO having the 12-membered ring is preferably 360 Å to 650 Å, more preferably 380 Å to 600 Å, still more preferably 450 Å to 600 Å, and particularly preferably 480 Å to 550 Å. It should be noted that this crystallite diameter is the value obtained by X-ray diffraction (XRD) measurement, and can be measured using a known XRD device in accordance with a known method.

The ALPO molecular sieve having the aforementioned crystallite diameter and the 12-membered ring can be manufactured as below.

In one well-known manufacturing method for the ALPO molecular sieve, first, an aqueous gel is prepared by mixing an aluminum source, a phosphorus source, a template (in other words, a structure-directing agent (SDA)), and water and then, this mixture is subjected to a hydrothermal synthesis reaction. By this method, the ALPO molecular sieves with various structures can be manufactured depending on the selection of the template and the reaction conditions, and the manufacturing method for the ALPO molecular sieve having the 12-membered ring is also well known.

Here, in the manufacturing method described above, the crystallite diameter of the ALPO molecular sieve to be generated can be controlled by adjusting the amount of water. In particular, much more water than usual is used to make the ALPO molecular sieve have a crystallite diameter of 360 Å or more. Using a large amount of water generates fewer nucleuses; thus, the crystallite diameter of the ALPO molecular sieve can be increased.

For example, in a case of using alumina (Al₂O₃) as the aluminum source, phosphorus pentoxide as the phosphorous source, and triethyl amine as the template, for example, 80 mol or more or preferably 100 mol or more of water is used per mole of Al₂O₃. It should be noted that if water is used excessively, the amount of nucleuses to be generated becomes too small, in which case the ALPO molecular sieve can become amorphous. Accordingly, the amount of water to be used is, for example, about 400 mol or less per mole of Al₂O₃. By preparing the aqueous gel and performing the hydrothermal synthesis reaction with such amount of water, the ALPO molecular sieve with a crystallite diameter of 360 Å to 700 Å can be easily obtained. Here, by adjusting the conditions (stirring time in particular) for preparing the aqueous gel and the reaction conditions (reaction time in particular) of the hydrothermal synthesis, the crystallite diameter can be controlled to some extent within the aforementioned range.

In this embodiment, the HC adsorption layer 20 may contain other HC adsorption material than the aforementioned ALPO molecular sieve (for example, a molecular sieve of ALPO not having 12-membered ring or zeolite). In the HC adsorption layer 20, typically more than 50 mass%, preferably 80 mass% or more, more preferably 90 mass% or more, and still more preferably 100 mass% of all the HC adsorption material is the ALPO molecular sieve having the aforementioned crystallite diameter and the 12-membered ring.

The particle diameter of the HC adsorption material is not limited in particular. The average primary particle diameter of the HC adsorption material (in particular, the ALPO molecular sieve having the aforementioned crystallite diameter and the 12-membered ring) is, for example, 0.5 µm to 60 µm and may be 0.5 µm to 30 µm. The average primary particle diameter of the HC adsorption material (in particular, the ALPO molecular sieve having the aforementioned crystallite diameter and the 12-membered ring) is preferably 1 µm to 26 µm and more preferably 1 µm to 10 µm, since the peeling resistance of the exhaust gas purifying layer 40 against the base material 11 is particularly high. It should be noted that the average particle diameter of the HC adsorption material can be determined by acquiring a scanning electron microscope (SEM) image, obtaining the particle diameters of arbitrarily selected 100 or more HC adsorption material particles, and calculating the average value. It should be noted that when the HC adsorption material particle is the ALPO molecular sieve, the size of a hexagonal columnar particle in a height direction is measured as the particle diameter.

The amount of the HC adsorption material in the exhaust gas purifying catalyst 10 is not limited in particular and can be designed as appropriate in consideration of the size of the cell 12 of the base material 11, the flow rate of the exhaust gas flowing in the exhaust gas purifying catalyst 10, or the like. The amount of the HC adsorption material per liter of the volume of the base material 11 may be, for example, 1 g/L or more, 5 g/L or more, 10 g/L or more, 15 g/L or more, or 20 g/L or more, and may be, for example, 200 g/L or less, 150 g/L or less, 100 g/L or less, 80 g/L or less, 60 g/L or less, 50 g/L or less, or 40 g/L or less.

It should be noted that in the present specification, "per liter of the volume of the base material" refers to per liter of the entire bulk capacity including the capacity of cell paths in addition to the pure volume of the base material. The amount described as (g/L) in the following description represents the amount included in a liter of the volume of the base material.

The HC adsorption layer 20 can contain a component other than the HC adsorption material as an optional component. Examples of the optional component of the HC adsorption layer 20 include binders such as an alumina sol and a silica sol, various kinds of additives, and the like.

The HC adsorption layer 20 may contain an oxygen storage capacity material (so-called OSC material) with oxygen storing and releasing capability or a non-oxygen storage capacity material (so-called non-OSC material) without the oxygen storing and releasing capability as another optional component. Examples of the OSC material and the non-OSC material are similar to the OSC material and the non-OSC material included in the catalyst layer 30 to be described below.

The content of each of the OSC material and the non-OSC material in the HC adsorption layer 20 is not limited in particular. As the HC adsorption material is contained more in the HC adsorption layer 20, more HC can be adsorbed. For this reason, the content of each of the OSC material and the non-OSC material in the HC adsorption layer 20 is preferably 40 mass% or less and more preferably 20 mass% or less.

On the other hand, since the exhaust gas purifying catalyst 10 includes the catalyst layer 30, the HC adsorption layer 20 does not contain the catalyst metal usually.

In one of the preferred aspects, the HC adsorption layer 20 consists only of the HC adsorption material and a binder component.

A part of the HC adsorption layer 20 may have a composition different from that of another part of the HC adsorption layer 20. For example, an upstream side X1 part (front part) and a downstream side X2 part (rear part) of the HC adsorption layer 20 in the cylinder axis direction X may have different compositions. Specifically, for example, the upstream side X1 part (front part) and the downstream side X2 part (rear part) of the HC adsorption layer 20 in the cylinder axis direction X may include the ALPO molecular sieves with different framework structures.

The coat amount (that is, formation amount) of the HC adsorption layer 20 is not limited in particular. The coat amount per liter of the volume of a part of the base material where the HC adsorption layer 20 is formed along the cylinder axis direction X is, for example, 3 to 200 g/L and may be 10 to 100 g/L. By satisfying the above range, both the improvement of the purification performance for the harmful components and the reduction of the pressure loss can be achieved at a high level. Moreover, the durability and the peeling resistance can be improved.

The thickness of the HC adsorption layer 20 is not limited in particular and may be designed as appropriate in consideration of the durability, the peeling resistance, or the like. The thickness of the HC adsorption layer 20 is, for example, 1 to 100 µm and may be 5 to 100 µm.

The coat width (average length) of the HC adsorption layer 20 in the cylinder axis direction X is not limited in particular. Since the larger coat width leads to the higher HC purifying performance, the coat width is, for example, 20% or more, preferably 50% or more, more preferably 80% or more, and still more preferably 90% or more of the entire length L of the base material 11, and may be the same length as the entire length L of the base material 11.

The catalyst layer 30 is a reaction field to purify the harmful component in the exhaust gas. The catalyst layer 30 is a porous body having a number of pores (gaps). The exhaust gas having entered the exhaust gas purifying catalyst 10 comes into contact with the catalyst layer 30 while flowing in the flow channel (cell 12) of the exhaust gas purifying catalyst 10. Thus, the harmful component in the exhaust gas is purified. For example, HC or CO included in the exhaust gas is oxidized by the catalyst layer 30 and converted (purified) into water, carbon dioxide, or the like. For example, NOx included in the exhaust gas is reduced by the catalyst layer 30 and converted (purified) into nitrogen.

The catalyst layer 30 includes at least the catalyst metal as a necessary component. As the catalyst metal, various metal species that can function as an oxidation catalyst or a reduction catalyst for purifying the harmful components can be used. Typical examples of the catalyst metal include a platinum group, that is, rhodium (Rh), palladium (Pd), platinum (Pt), ruthenium (Ru), osmium (Os), and iridium (Ir). Instead of the platinum group or in addition to the platinum group, other metal species may be used. For example, metal species such as iron (Fe), cobalt (Co), nickel (Ni), copper (Cu), silver (Ag), or gold (Au) may be used. In addition, an alloy of two or more kinds of these metals may be used. As the catalyst metal, the oxidation catalyst with high oxidizing activity (for example, at least one of Pd and Pt) and the reduction catalyst with high reducing activity (for example, Rh) are preferable, and it is particularly preferable to combine two or more kinds thereof. The oxidation catalyst and the reduction catalyst may exist in the same (single) catalyst layer or may exist in separate catalyst layers.

The catalyst metal is preferably used as microparticles with sufficiently small particle diameter from the viewpoint of increasing the contact area with the exhaust gas. The average particle diameter of the catalyst metal (specifically, the average value of the particle diameters of 50 or more particles of the catalyst metal obtained by a transmission electron microscope (TEM)) is generally 1 to 15 nm, for example 10 nm or less, and may be 5 nm or less.

The amount of the catalyst metal in the exhaust gas purifying catalyst 10 is not limited in particular and can be determined as appropriate in accordance with the kind of the catalyst metal or the like. The amount of the catalyst metal per liter of the volume of the base material 11 may be, for example, 0.01 g/L or more, 0.03 g/L or more, 0.05 g/Lor more, 0.08 g/L or more, or 0.10 g/L or more from the viewpoint of the high exhaust gas purifying performance in particular. The amount of the catalyst metal per liter of the volume of the base material 11 may be, for example, 15.00 g/L or less, 10.00 g/L or less, 5.00 g/L or less, 3.00 g/L or less, 1.50 g/L or less, 1.00 g/L or less, 0.80 g/L or less, or 0.50 g/L or less from the viewpoint of the balance between the exhaust gas purifying performance and the cost.

The catalyst metal is normally supported by a carrier. Therefore, the catalyst layer 30 may further contain a carrier that carries the catalyst metal.

As the carrier that carries the catalyst metal, a known material that is used as the carrier for the catalyst metal of the exhaust gas purifying catalyst can be used. The carrier is typically an inorganic porous body. As the carrier, a material without the oxygen storing capability (non-OSC material), such as aluminum oxide (Al₂O₃, alumina), titanium oxide (TiO₂, titania), zirconium oxide (ZrO₂, zirconia), or silicon oxide (SiO₂, silica); a material with the oxygen storing capability (OSC material), such as ceria (CeO₂) or a composite oxide containing ceria; or the like is given. As the carrier, any of the non-OSC material and the OSC material may be used or both may be used.

To the oxides used as the non-OSC material, a small amount (for example, 1 mass% or more and 10 mass% or less) of the oxide of the rare-earth element, such as Pr₂O₃, Nd₂O₃, La₂O₃, or Y₂O₃, may be added in order to improve the heat resistance or the like. The non-OSC material is preferably Al₂O₃, and more preferably Al₂O₃ in which La₂O₃ is compounded (La₂O₃-Al₂O₃ composite oxide; LA composite oxide) because the heat resistance and the durability are particularly excellent.

Regarding the OSC material, a composite oxide containing ceria and zirconia (ceria-zirconia composite oxide (so-called CZ composite oxide or ZC composite oxide)) or the like is given as the composite oxide containing ceria. In the case where the OSC material contains zirconium oxide, the thermal deterioration of cerium oxide can be suppressed; therefore, the ceria-zirconia composite oxide is preferable as the OSC material.

The OSC material may contain an oxide of a rare-earth element for the purpose of improving the characteristics (in particular, heat resistance and oxygen absorption and release characteristics, etc.). Examples of the rare-earth element include Sc, Y, La, Pr, Nd, Pm, Sm, Eu, Gd, Tb, Dy, Ho, Er, Tm, Yb, Lu, and the like. As the oxide of the rare-earth element, Pr₂O₃, Nd₂O₃, La₂O₃, and Y₂O₃ are preferably given.

In the case where the OSC material is the composite oxide containing cerium oxide, the content of cerium oxide in the composite oxide is preferably 15 mass% or more and more preferably 20 mass% or more from the viewpoint of sufficiently exerting the oxygen storing capability. On the other hand, if the content of cerium oxide is too high, the basicity of the OSC may become too high. In view of this, the content of cerium oxide is preferably 40 mass% or less and more preferably 30 mass% or less.

In one example, the catalyst layer 30 includes the OSC material and the non-OSC material and the catalyst metal is carried by both the OSC material and the non-OSC material.

The catalyst layer 30 may further contain the OSC material and/or the non-OSC material described above in the mode of not carrying the catalyst metal. The OSC material and the non-OSC material used as the carrier as well as the OSC material and the non-OSC material used as a non-carrier preferably do not contain Si.

The amount of the OSC material and the amount of the non-OSC material in the exhaust gas purifying catalyst 10 are not limited in particular and can be designed as appropriate in consideration of the size of the cell 12 of the base material 11, the flow rate of the exhaust gas flowing in the exhaust gas purifying catalyst 10, or the like. The total amount of the OSC material and the non-OSC material per liter of the volume of the base material 11 (the total amount of the OSC material and the non-OSC material including both the carrier and the non-carrier) may be, for example, 50 g/L or more, 70 g/L or more, 80 g/L or more, 90 g/L or more, or 100 g/L or more and may be, for example, 300 g/L or less, 250 g/L or less, 200 g/L or less, 180 g/L or less, or 160 g/L or less.

The catalyst layer 30 preferably includes the OSC material as the carrier for the catalyst metal or in the mode of not carrying the catalyst metal. In this case, even when the air-fuel ratio of the exhaust gas varies depending on a travel condition of a vehicle or the like, for example, the excellent purifying performance can be exhibited stably.

The catalyst layer 30 may include an alkaline-earth element such as calcium (Ca) or barium (Ba). By the alkaline-earth element, the toxification of the catalyst metal (oxidation catalyst in particular) can be suppressed. Moreover, by the alkaline-earth element, the dispersibility of the catalyst metal can be increased and the sintering due to the particle growth of the catalyst metal can be suppressed. In the case where the catalyst layer 30 contains the alkaline-earth element together with the OSC material, the amount of oxygen absorption into the OSC material in a lean atmosphere (oxygen-excess atmosphere) in which the fuel is less than the theoretical air-fuel ratio can be improved further. The alkaline-earth element can be contained in a form of oxide, hydroxide, carbonate, nitrate, sulfate, phosphate, acetate, formate, oxalate, halide, or the like.

The catalyst layer 30 may include a NOx adsorption material with NOx storing capability, a stabilizer, or the like. Examples of the stabilizer include rare-earth elements such as yttrium (Y), lanthanum (La), and neodymium (Nd). It should be noted that the rare-earth element can exist in the catalyst layer 30 in a form of the oxide.

As other optional components of the catalyst layer 30, binders such as alumina sol and silica sol, various kinds of additives, and the like are given. As the binder, the binder that does not contain Si is preferable, and therefore, alumina sol is preferable.

The catalyst layer 30 may include the HC adsorption material; however, since the exhaust gas purifying catalyst 10 according to this embodiment includes the HC adsorption layer 20, the catalyst layer 30 preferably does not include the HC adsorption material.

Although there is no particular limitation, the coat amount (formation amount) of the catalyst layer 30 per liter of the volume of the exhaust gas purifying catalyst 10 (the volume of the base material 11) may be about 30 g/L or more, typically 50 g/L or more, preferably 70 g/L or more, and for example 100 g/L or more, and may be about 500 g/L or less, typically 400 g/L or less, and for example 300 g/L or less. By satisfying the above range, both the improvement in purifying performance and the decrease of the pressure loss can be achieved at the high level. It should be noted that in this specification, the term "coat amount" refers to the mass of the solid content included per unit volume of the exhaust gas purifying catalyst 10.

The length and thickness of the catalyst layer 30 can be designed as appropriate in consideration of, for example the size of the cell 12 of the base material 11, the flow rate of the exhaust gas flowing in the exhaust gas purifying catalyst 10, and the like. The catalyst layer 30 may be provided either continuously or intermittently on the partition wall 14 of the base material 11. For example, the catalyst layer 30 may be provided along the cylinder axis direction X from the exhaust gas inlet 10a or may be provided along the cylinder axis direction X from the exhaust gas outlet 10b.

Although there is no particular limitation, the entire coat width (average length) of the catalyst layer 30 in the cylinder axis direction X is about 20% or more, preferably 50% or more, typically 80% or more, and for example 90% or more of the entire length L of the base material 11, and may be the same length as the entire length L of the base material 11. Although there is no particular limitation, the coat thickness (average thickness) of the catalyst layer 30 is about 1 to 300 µm, typically 5 to 200 µm, and for example 10 to 100 µm. Thereby, both the improvement in purifying performance and the decrease of the pressure loss can be achieved at the high level.

A part of the catalyst layer 30 may have a composition different from that of another part of the catalyst layer 30. For example, the upstream side X1 part (front part) and the downstream side X2 part (rear part) of the catalyst layer 30 in the cylinder axis direction X may have different compositions. Specifically, for example, the upstream side X1 part (front part) and the downstream side X2 part (rear part) of the catalyst layer 30 in the cylinder axis direction X may contain different catalyst metals.

The exhaust gas purifying catalyst 10 illustrated in Fig. 3 includes only the exhaust gas purifying layer 40. However, the exhaust gas purifying catalyst 10 may include a layer in addition to these. For example, the exhaust gas purifying catalyst 10 may include another layer (can also be called under-layer) between the base material 11 and the exhaust gas purifying layer 40 or may include another layer on the exhaust gas purifying layer 40. Furthermore, the exhaust gas purifying layer 40 may additionally include a layer involved in the purification of the exhaust gas, other than the HC adsorption layer 20 and the catalyst layer 30.

The catalyst layer 30 of the exhaust gas purifying catalyst 10 illustrated in Fig. 3 has a single-layer structure. The catalyst layer 30, however, may have a multilayer structure in which each layer contains the catalyst metal. An example of the exhaust gas purifying catalyst in the case where the catalyst layer 30 has the multilayer structure will hereinafter be described.

### <<Modification of exhaust gas purifying catalyst 10>>

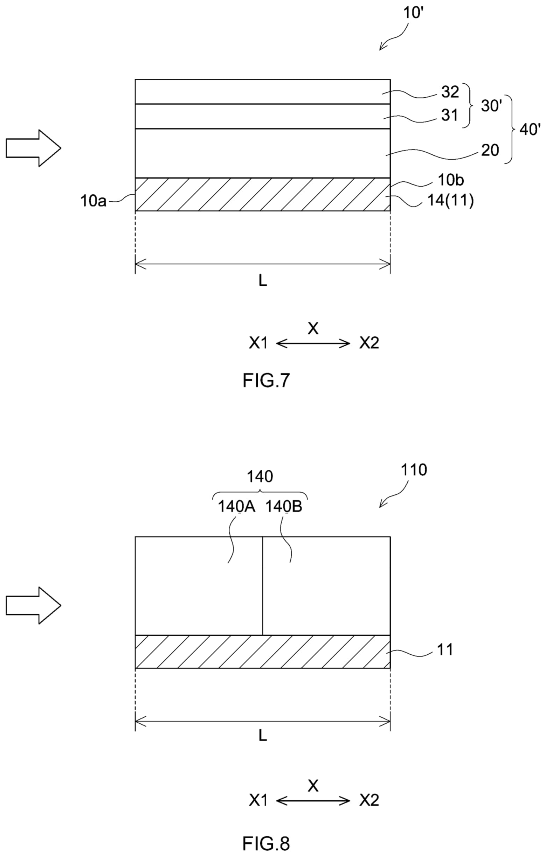

Fig. 7 is a partial cross-sectional view schematically illustrating a part of a cross section where an exhaust gas purifying catalyst 10', which corresponds to a modification of the exhaust gas purifying catalyst 10, is cut along the cylinder axis direction X. The exhaust gas purifying catalyst 10' includes the base material 11 and an exhaust gas purifying layer 40' provided at the base material 11. The exhaust gas purifying layer 40' includes the HC adsorption layer 20 and a catalyst layer 30' with a multilayer structure. The HC adsorption layer 20 and the catalyst layer 30' are stacked so that the HC adsorption layer 20 exists on the base material 11 side relative to the catalyst layer 30'. By allowing the catalyst layer 30' to have the multilayer structure, the exhaust gas purifying performance can be enhanced further.

The base material 11 and the HC adsorption layer 20 are the same as or similar to those described above. The catalyst layer 30' has the multilayer structure, which is different from the example illustrated in Fig. 3. Specifically, the catalyst layer 30' has a multilayer structure in which a first part catalyst layer (lower layer) 31 and a second part catalyst layer (upper layer) 32 are stacked in a thickness direction. Therefore, the lower layer 31 is disposed on the base material 11 side. In the illustrated example, the lower layer 31 is provided in contact with a surface of the HC adsorption layer 20 and the upper layer 32 is provided in contact with an upper surface of the lower layer 31. In the illustrated example, the catalyst layer 30' has a two-layer structure; however, the catalyst layer 30' may have a multilayer structure including three or more layers. For example, the catalyst layer 30' may have an intermediate layer between the lower layer 31 and the upper layer 32, or the catalyst layer 30' may have another layer on the upper layer 32.

Each of the lower layer 31 and the upper layer 32 contains the catalyst metal. Here, the lower layer 31 and the upper layer 32 may include the same catalyst metal or different catalyst metals, and preferably include the different catalyst metals.

Specifically, for example, the lower layer 31 includes the oxidation catalyst (for example, at least one of Pd and Pt) as the catalyst metal and the upper layer 32 includes the reduction catalyst (for example, Rh) as the catalyst metal. In this case, the exhaust gas purifying catalyst 10' is excellent particularly in the exhaust gas purifying performance. From the viewpoint of the higher exhaust gas purifying performance, it is advantageous that the catalyst metal of the lower layer 31 is Pt and the catalyst metal of the upper layer 32 is Rh. In this case, this is particularly advantageous in purifying paraffin. Alternatively, from the viewpoint of the higher exhaust gas purifying performance, it is advantageous that the catalyst metal of the lower layer 31 is Pd and the catalyst metal of the upper layer 32 is Rh. In this case, this is particularly advantageous in purifying olefin.

It should be noted that in the case where the lower layer 31 includes Pt, preferably 80 mass% or more, more preferably 90 mass% or more, still more preferably 95 mass% or more, and the most preferably 100 mass% of the catalyst metal included in the lower layer 31 is Pt. In the case where the lower layer 31 includes Pd, preferably 80 mass% or more, more preferably 90 mass% or more, still more preferably 95 mass% or more, and the most preferably 100 mass% of the catalyst metal included in the lower layer 31 is Pd. In the case where the upper layer 32 includes Rh, preferably 80 mass% or more, more preferably 90 mass% or more, still more preferably 95 mass% or more, and the most preferably 100 mass% of the catalyst metal included in the upper layer 32 is Rh.

The lower layer 31 and the upper layer 32 may contain the optional component the same as or similar to that of the catalyst layer 30 described above.

### <<Manufacturing method for exhaust gas purifying catalyst 10>>

The exhaust gas purifying catalyst 10 can be manufactured by the following method, for example. First, the base material 11, an HC adsorption layer formation slurry for forming the HC adsorption layer 20, and a catalyst layer formation slurry for forming the catalyst layer 30 are prepared.

The HC adsorption layer formation slurry can be prepared by, for example, mixing the ALPO molecular sieve having the aforementioned crystallite diameter and the 12-membered ring, and another optional component (for example, the non-OSC material, the OSC material, the binder, various additives, or the like) in a dispersion medium. The catalyst layer formation slurry can be prepared by mixing, for example, a catalyst metal source (for example, a solution including the catalyst metal as ions) and another optional component (for example, the non-OSC material, the OSC material, the binder, various additives, or the like) in the dispersion medium. As the dispersion medium, for example, water, a mixture of water and a water-soluble organic solvent, or the like can be used. The properties of these slurries (for example, viscosity, solid content ratio, or the like) can be determined as appropriate in accordance with the size of the base material 11 to be used, the mode of the cell 12 (partition wall 14), the required characteristics for the HC adsorption layer 20 and the catalyst layer 30, and the like.

Next, the HC adsorption layer 20 is formed on the base material 11 using the HC adsorption layer formation slurry. The HC adsorption layer 20 can be formed by a conventionally known method (for example, an impregnation method, a wash-coating method, or the like). Specifically, for example, the HC adsorption layer formation slurry is poured into the cells 12 from an end part of the base material 11 and supplied to a predetermined length along the cylinder axis direction X. The slurry may be poured from either the inlet 10a or the outlet 10b. In this case, the superfluous slurry may be sucked from an end part on the opposite side. Alternatively, the superfluous slurry may be discharged from the cells 12 by sending air from the end part on the opposite side, for example.

Next, the base material 11 to which the slurry has been supplied is fired at a predetermined temperature for a predetermined length of time. A firing method may be the same as or similar to the conventional one. Before the firing, drying may be performed to remove the dispersion medium. Thereby, the HC adsorption layer 20 can be formed on the base material 11.

Subsequently, the catalyst layer 30 is formed using the catalyst layer formation slurry. The catalyst layer 30 can be formed by the conventionally known method (for example, the impregnation method, the wash-coating method, or the like). For example, in a manner similar to the above, the catalyst layer formation slurry is poured into the cells 12 from the end part of the base material 11 and supplied to a predetermined length along the cylinder axis direction X. In this manner, the catalyst layer formation slurry is applied on the HC adsorption layer 20 formed on the base material 11.

Next, this is fired at a predetermined temperature for a predetermined time. The firing may be performed by a method the same as or similar to a conventional method. Before the firing, drying may be performed to remove the dispersion medium. Thus, the catalyst layer 30 can be formed on the HC adsorption layer 20 formed on the base material 11. In this manner, the exhaust gas purifying catalyst 10 can be obtained.

### [Second embodiment]

A second embodiment is different from the first embodiment in a structure of the exhaust gas purifying layer of the exhaust gas purifying catalyst. Therefore, this point is mainly described and the description about the same point as that in the first embodiment will be basically omitted.

Fig. 8 is a partial cross-sectional view where an exhaust gas purifying catalyst 110 in the second embodiment is cut in the cylinder axis direction. As illustrated in Fig. 8, the exhaust gas purifying catalyst 110 according to the second embodiment includes the base material 11 and an exhaust gas purifying layer 140. For the base material 11, the same base material as that of the first embodiment is used. The exhaust gas purifying layer 140 contains the catalyst metal and the molecular sieve that does not substantially contain Si as the HC adsorption material. The molecular sieve that does not substantially contain Si is the ALPO molecular sieve having the 12-membered ring. The crystallite diameter of the ALPO molecular sieve obtained by the X-ray diffraction measurement is 360 Å to 700 Å.

In the second embodiment, the exhaust gas purifying layer 140 includes an upstream side X1 part (front part) 140A and a downstream side X2 part (rear part) 140B in the cylinder axis direction X. The front part 140A is configured as the HC adsorption layer containing the ALPO molecular sieve described above and the rear part 140B is configured as the catalyst layer containing the catalyst metal.

The composition of the HC adsorption layer included in the front part 140A may be the same as that of the HC adsorption layer 20 of the exhaust gas purifying catalyst 10 according to the first embodiment. The composition of the catalyst layer included in the rear part 140B may be the same as that of the catalyst layer 30 of the exhaust gas purifying catalyst 10 according to the first embodiment.

The amount of each of the catalyst metal, the ALPO molecular sieve, the OSC material, and the non-OSC material in the exhaust gas purifying catalyst 110 is not limited in particular and may be the same as that in the exhaust gas purifying catalyst 10 according to the first embodiment.

The ratio of the coat width (average length) in the cylinder axis direction X between the front part 140A and the rear part 140B is, for example, 5:95 to 90:10, preferably 10:90 to 80:20, and more preferably 20:80 to 70:30, although there is no particular limitation.

Although each of the front part 140A and the rear part 140B has a single-layer structure, a multilayer structure may be employed. For example, the rear part 140B may have a multilayer structure including an upper layer on a surface layer part side and a lower layer on the base material side, in which the upper layer and the lower layer contain different kinds of catalyst metals.

Specifically, for example, the rear part 140B has the multilayer structure including the upper layer on the surface layer part side and the lower layer on the base material side, in which the upper layer contains the reduction catalyst (for example, Rh) as the catalyst metal and the lower layer contains the oxidation catalyst (for example, at least one of Pd and Pt) as the catalyst metal. In this case, the exhaust gas purifying catalyst 110 is excellent particularly in the exhaust gas purifying performance.

It should be noted that, in the exhaust gas purifying layer 140, the front part 140A can be configured as the catalyst layer and the rear part 140B can be configured as the HC adsorption layer. However, in the case where the front part 140A is configured as the HC adsorption layer and the rear part 140B is configured as the catalyst layer, when the HC adsorbed in the front part 140A is desorbed from the front part 140A, such HC can be purified in the rear part 140B; thus, the aforementioned structure is advantageous particularly in terms of the HC purifying efficiency.

Although the front part 140A and the rear part 140B are in contact with each other in the illustrated example, these parts may be apart from each other. Moreover, due to a reason in the manufacturing method, or the like, an X2 side end part of the front part 140A and an X1 side end part of the rear part 140B may overlap with each other partially.

Although there is no particular limitation, the coat amount (formation amount) of the exhaust gas purifying layer 140 per liter of the volume of the exhaust gas purifying catalyst 110 (the volume of the base material 11) may be about 30 g/L or more, typically 50 g/L or more, preferably 70 g/L or more, and for example 100 g/L or more, and may be about 500 g/L or less, typically 400 g/L or less, and for example 300 g/L or less. By satisfying the aforementioned range, it is possible to achieve both the improvement of the purifying performance and the reduction of the pressure loss at the high level. It should be noted that, in this specification, the term "coat amount" refers to the mass of the solid content contained per unit volume of the exhaust gas purifying catalyst 10.

Although there is no particular limitation, the entire coat width (average length) of the exhaust gas purifying layer 140 in the cylinder axis direction X is about 20% or more, preferably 50% or more, typically 80% or more, and for example 90% or more of the entire length L of the base material 11, and may be the same length as the entire length L of the base material 11. Although there is no particular limitation, the coat thickness (average thickness) of the exhaust gas purifying layer 140 is about 1 to 300 µm, typically 5 to 200 µm, and for example 10 to 100 µm. Thereby, both the improvement in purifying performance and the decrease of the pressure loss can be achieved at the high level.

The exhaust gas purifying catalyst 110 according to the second embodiment can be manufactured by the following method, for example. First, the base material 11, the HC adsorption layer formation slurry, and the catalyst layer formation slurry are prepared in a manner the same as or similar to the first embodiment.

The HC adsorption layer formation slurry is poured to a predetermined position from an exhaust gas inflow side end part of the base material 11, and dried. The catalyst layer formation slurry is poured to a predetermined position from an exhaust gas outflow side end part of the base material 11, and dried. After that, the firing is performed, so that the exhaust gas purifying layer 140 including the front part composed of the HC adsorption layer and the rear part composed of the catalyst layer is formed on the base material 11. Thereby, the exhaust gas purifying catalyst 110 can be obtained.

### [Third embodiment]

A third embodiment is different from the first embodiment in a structure of the exhaust gas purifying layer of the exhaust gas purifying catalyst. Therefore, this point is mainly described and the description about the same point as that in the first embodiment will be basically omitted.

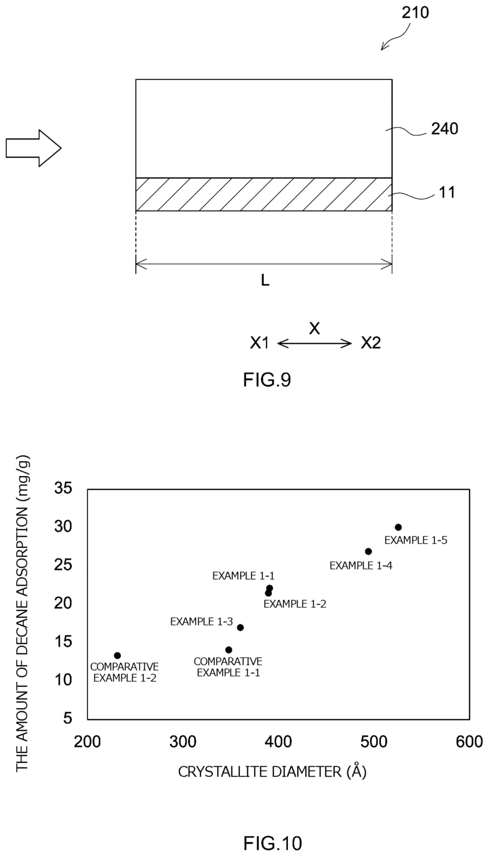

Fig. 9 is a partial cross-sectional view where an exhaust gas purifying catalyst 210 in the third embodiment is cut in the cylinder axis direction. As illustrated in Fig. 9, the exhaust gas purifying catalyst 210 in the third embodiment includes the base material 11 and an exhaust gas purifying layer 240. For the base material 11, the same base material as that of the first embodiment is used. The exhaust gas purifying layer 240 includes the catalyst metal and the molecular sieve that does not substantially contain Si as the HC adsorption material. The molecular sieve that does not substantially contain Si is the ALPO molecular sieve having the 12-membered ring. The crystallite diameter of the ALPO molecular sieve obtained by the X-ray diffraction measurement is 360 Å to 700 Å. In the third embodiment, this ALPO molecular sieve and the catalyst metal are contained in a mixed state in one layer.

In the exhaust gas purifying layer 240, the catalyst metal may be carried by the ALPO molecular sieve described above or supported by the carrier. Therefore, the exhaust gas purifying layer 240 may further contain the carrier that carries the catalyst metal. The catalyst metal may be carried by any of the aforementioned ALPO molecular sieve and the carrier or by both. Examples of the carrier include the aforementioned OSC material and the aforementioned non-OSC material.

In one example, the exhaust gas purifying layer 240 includes the catalyst metal, the aforementioned ALPO molecular sieve, the OSC material, and the non-OSC material, and the catalyst metal is carried by all of the aforementioned ALPO molecular sieve, the OSC material, and the non-OSC material. In another example, the exhaust gas purifying layer 240 includes the catalyst metal, the aforementioned ALPO molecular sieve, the OSC material, and the non-OSC material, and the catalyst metal is carried by the non-OSC material. In still another example, the exhaust gas purifying layer 240 includes the catalyst metal, the aforementioned ALPO molecular sieve, the OSC material, and the non-OSC material, and the catalyst metal is carried by the OSC material and the non-OSC material.

The exhaust gas purifying layer 240 may contain the alkaline earth element, the NOx adsorption material, the stabilizer, the binder, various kinds of additives, an NH₃ adsorption material, or the like as the optional component. As the binder, the binder that does not contain Si is preferable, and therefore, alumina sol is preferable.

The amount of each of the catalyst metal, the ALPO molecular sieve, the OSC material, and the non-OSC material in the exhaust gas purifying catalyst 210 is not limited in particular and may be the same as that in the exhaust gas purifying catalyst 10 according to the first embodiment.

Although there is no particular limitation, the coat amount (formation amount) of the exhaust gas purifying layer 240 per liter of the volume of the exhaust gas purifying catalyst 10 (the volume of the base material 11) may be about 30 g/L or more, typically 50 g/L or more, preferably 70 g/L or more, and for example 100 g/L or more, and may be about 500 g/L or less, typically 400 g/L or less, and for example 300 g/L or less. By satisfying the aforementioned range, it is possible to achieve both the improvement of the purifying performance and the reduction of the pressure loss at the high level. It should be noted that, in this specification, the term "coat amount" refers to the mass of the solid content contained per unit volume of the exhaust gas purifying catalyst 10.

Although there is no particular limitation, the entire coat width (average length) of the exhaust gas purifying layer 240 in the cylinder axis direction X is about 20% or more, preferably 50% or more, typically 80% or more, and for example 90% or more of the entire length L of the base material 11, and may be the same length as the entire length L of the base material 11. Although there is no particular limitation, the coat thickness (average thickness) of the exhaust gas purifying layer 240 is about 1 to 300 µm, typically 5 to 200 µm, and for example 10 to 100 µm. Thereby, both the improvement in purifying performance and the decrease of the pressure loss can be achieved at the high level.

A part of the exhaust gas purifying layer 240 may have a composition different from that of another part of the exhaust gas purifying layer 240. For example, for example, the upstream side X1 part (front part) and the downstream side X2 part (rear part) of the exhaust gas purifying layer 240 in the cylinder axis direction X may have different compositions. Specifically, for example, the upstream side X1 part (front part) and the downstream side X2 part (rear part) of the exhaust gas purifying layer 240 in the cylinder axis direction X may contain different kinds of catalyst metals or may contain different kinds of the aforementioned ALPO molecular sieves.

Although the exhaust gas purifying layer 240 has the single-layer structure in the illustrated example, the exhaust gas purifying layer 240 may have a multilayer structure. For example, the exhaust gas purifying layer 240 may have a multilayer structure including an upper layer on a surface layer part side and a lower layer on the base material side, in which each of the upper layer and the lower layer contains the aforementioned ALPO molecular sieve and the catalyst metal. In this case, the upper layer and the lower layer may contain different kinds of catalyst metals or may contain different kinds of the aforementioned ALPO molecular sieves.

Specifically, for example, the exhaust gas purifying layer 240 has the multilayer structure including the upper layer on the surface layer part side and the lower layer on the base material side, in which the upper layer contains the aforementioned ALPO molecular sieve and the reduction catalyst (for example, Rh) as the catalyst metal and the lower layer contains the aforementioned ALPO molecular sieve and the oxidation catalyst (for example, at least one of Pd and Pt) as the catalyst metal. In this case, the exhaust gas purifying catalyst 210 is excellent particularly in the exhaust gas purifying performance.

The exhaust gas purifying catalyst 210 according to the third embodiment can be manufactured by the following method, for example. First, the base material 11, and an exhaust gas purifying layer formation slurry for forming the exhaust gas purifying layer 240 are prepared. The exhaust gas purifying layer formation slurry can be prepared by mixing, for example, a catalyst metal source (for example, a solution including the catalyst metal as ions), the aforementioned ALPO molecular sieve, and another optional component (for example, the non-OSC material, the OSC material, the binder, various additives, or the like) in a dispersion medium.

Next, the exhaust gas purifying layer formation slurry is applied to the base material 11 in accordance with the conventionally known method, dried if necessary, and then fired. Thereby, the exhaust gas purifying layer 240 can be formed on the base material 11 and the exhaust gas purifying catalyst 210 can be obtained.

### <<Applications of exhaust gas purifying catalysts 10, 110, and 210>>

The exhaust gas purifying catalysts 10, 110, and 210 can be used suitably for purifying the exhaust gas emitted from the internal-combustion engines of, in addition to vehicles such as an automobile and a truck, a motorcycle, and a bicycle with a motor, marine products such as a vessel, a tanker, a water bike, a personal watercraft, and an outboard motor, garden products such as a mowing machine, a chain saw, and a trimmer, leisure products such as a golf cart and a four-wheeled buggy, generator sets such as a cogeneration system, an incinerator, and the like. Among these, the exhaust gas purifying catalysts can be suitably used for the vehicle such as automobiles and can be used particularly suitably for the vehicle including a gasoline engine.

### <<Hydrocarbon adsorption material>>

In another aspect, the hydrocarbon (HC) adsorption material disclosed herein includes the aforementioned ALPO molecular sieve. That is to say, the HC adsorption material disclosed herein includes the aforementioned ALPO molecular sieve. This ALPO molecular sieve has the 12-membered ring. The crystallite diameter of the ALPO molecular sieve obtained by the X-ray diffraction measurement is 360 Å to 700 Å. In such a structure, the amount of HC adsorption is high even after the hydrothermal enduring. Therefore, in the case where the exhaust gas purifying catalyst is configured using the HC adsorption material disclosed herein, the HC purifying performance at the cold start after the hydrothermal enduring is high.

Although Test Examples of the present invention will be described below, the present invention is not intended to be limited to these Test Examples.

### <Manufacture of HC adsorption material>

### [Example 1-1]

Water was mixed with Al₂O₃ in an amount of 100 mol per mole of Al₂O₃ and the mixture was stirred for 30 minutes. In the obtained mixture, 1 mol of P₂O₅ was added per mole of Al₂O₃ and moreover, 1.55 mol of triethyl amine (TEA) was added thereto. This mixture was stirred for 30 minutes, and thereby, an aqueous gel was obtained. The obtained aqueous gel was transferred to an autoclave, where hydrothermal synthesis was performed at 210°C for 36 hours. After that, centrifugal separation was performed and the precipitate was filtered and then washed. The precipitate was dried overnight in a drier set at 80°C. After that, the precipitate was fired in an electric furnace for an hour at 150°C and further fired for six hours at 600°C. Thereby, an ALPO molecular sieve corresponding to the HC adsorption material in Example 1-1 was obtained.

### [Examples 1-2 and 1-3, and Comparative Examples 1-1 and 1-2]

An ALPO molecular sieve corresponding to the HC adsorption material in each of Examples and Comparative Examples was obtained in a manner similar to Example 1-1 except that the amount of water used relative to 1 mol of Al₂O₃ was changed as shown in Table 1. It should be noted that the ALPO molecular sieve in Comparative Example 1-1 was manufactured under conventionally common conditions.

### [Example 1-4]

An ALPO molecular sieve corresponding to an HC adsorption material according to Example 1-4 was obtained in a manner similar to Example 1-1 except that 200 mol of water was mixed per mole of Al₂O₃ and the hydrothermal synthesis reaction time was changed from 36 hours to 42 hours.

### [Example 1-5]

An ALPO molecular sieve corresponding to an HC adsorption material according to Example 1-5 was obtained in a manner similar to Example 1-1 except that 200 mol of water was mixed per mole of Al₂O₃ and the stirring time after P₂O₅ and triethyl amine were added was changed from 30 minutes to 3 hours.

### <Measurement of crystallite diameter>

The crystallite diameter of the ALPO molecular sieve in each of Examples and Comparative Examples was measured using an XRD device "RINT TTR III" (manufactured by Rigaku Corporation). The measurement conditions are as follows. In addition, the crystallite diameter was calculated using Integrated Powder X-ray Analysis software PDXL2 (ver. 2.8.1.1) attached to the device. Specifically, the crystallite diameter of ALPO in each of Examples and Comparative Examples was calculated from "the crystallite size" in the analysis item of the software. It should be noted that the Halder-Wangner method without calibration was used as the analysis method. The measurement results of the crystallite diameter are shown in Table 1.
Operation axis: 2θ/θ
Ray source: CuKα
Measurement method: continuous
Voltage: 40 kV
Current: 250 mA
Start angle: 2θ = 5°
End angle: 2θ = 85°
Sampling width: 0.02°
Scan speed: 8.00 °/min
Divergence slit: 1°
Divergence vertical limiting slit: 10 mm
Scattering slit: 8 mm
Light-receiving slit: 13 mm

### <Measurement of average primary particle diameter>

Using a commercially-available SEM device, a SEM image of the ALPO molecular sieve in each of Examples and Comparative Examples was measured. The particle diameters of the arbitrarily selected 100 or more primary particles of ALPO molecular sieve were determined, and the average value thereof was calculated to obtain the average primary particle diameter. It should be noted that the size of the ALPO particle with a hexagonal columnar shape in the height direction was employed as the particle diameter. The results are shown in Table 1.

### <Evaluation of the amount of HC adsorption after hydrothermal enduring>

As a hydrothermal enduring treatment, a rich gas and a lean gas were fed to the ALPO molecular sieve according to each of Examples and Comparative Examples manufactured as above for 10 hours at 900°C while these gases were alternately switched every 10 minutes. The rich gas had a composition of CO: 5%, water: 10%, and N₂: the rest and the lean gas had a composition of O₂: 2.5%, water: 10%, and N₂: the rest.

1.0 g of the ALPO molecular sieve according to each of Examples and Comparative Examples after the hydrothermal enduring treatment described above was weighed out and transferred to a tablet molding die with a diameter of 35 mm. Using a hydraulic manual pressing machine (TP-40, manufactured by HERZOG), this was compressed with a pressure of 26 MPa for one minute, and thereby, a disc-shaped sample was prepared. This disc-shaped sample was crushed roughly in a mortar, and the crushed object was passed through a sieve with a mesh opening of 1 mm and a sieve with a mesh opening of 0.5 mm in this order. Thereby, pellet samples with a size of 0.5 mm to 1 mm were obtained.

The pellet samples with a dry weight of 0.5 g were set to an adsorption device. By increasing the temperature to 500°C at a temperature increasing rate of 25 °C/min, pretreatment was performed, so that hydrocarbons and water remaining in the pores of the ALPO molecular sieve were removed. Next, after the temperature of the adsorption device was decreased to 100°C, a mixed gas containing 3000 ppmC of decane (C₁₀H₂₂) and 3% of water was fed to the adsorption device with a flow rate of 5 L/min for 15 minutes. After that, the gas to be fed was changed to 100%-N₂ and this gas was fed for 5 minutes; then, while N₂ was fed, the temperature was increased to 550°C at a temperature increase rate of 20 °C/min. By this, decane adsorbed on ALPO was desorbed. By integrating the amount of desorbed decane, the amount of decane that had been adsorbed on the ALPO molecular sieve (mg/g) was calculated. The results are shown in Fig. 10.

### [Table 1]

**Table 1**

| | Materials (molar ratio) | | | | Crystallite diameter (Å) | Average primary particle diameter (*µ*m) |
|---|---|---|---|---|---|---|
| | Al₂O₃ | P₂O₅ | TEA | H₂O | | |
| Example 1-1 | 1 | 1 | 1.55 | 100 | 390 | 2.04 |
| Example 1-2 | 1 | 1 | 1.55 | 200 | 389 | 6.32 |
| Example 1-3 | 1 | 1 | 1.55 | 400 | 360 | 25.1 |
| Example 1-4 | 1 | 1 | 1.55 | 200 | 494 | 51.5 |
| Example 1-5 | 1 | 1 | 1.55 | 200 | 525 | 6.59 |
| Comparative Example 1-1 | 1 | 1 | 1.55 | 50 | 348 | 0.78 |
| Comparative Example 1-2 | 1 | 1 | 1.55 | 450 | 231 | 26.3 |

The results in Table 1 and Fig. 10 show that the amount of HC adsorption suddenly increases when the crystallite diameter of the ALPO molecular sieve becomes 360 Å or more. The HC purifying performance at the cold start largely depends on the HC adsorbing capability of the HC adsorption material because the catalyst metal is not heated to the activation temperature. Therefore, the results in Fig. 10 indicate that the HC purifying performance at the cold start after the hydrothermal enduring becomes particularly high when the crystallite diameter of the ALPO molecular sieve is 360 Å or more.

### <Manufacture of exhaust gas purifying catalyst>

### [Example 2-1]

A honeycomb base material (made of cordierite, diameter: 105.7 mm, and entire length: 74.7 mm) was prepared. The ALPO molecular sieve manufactured in Example 1-1, the binder, and ion exchanged water were mixed to prepare an ALPO-contained slurry. This ALPO-contained slurry was poured into the base material and an unnecessary part was blown away with a blower; thus, coating was performed. By firing this in the electric furnace, a lower layer containing the ALPO molecular sieve was formed on the base material. The coat amount of the lower layer was 50 g/L for the ALPO molecular sieve and 8.1 g/L for the binder. The coat width of the lower layer was 100% of the entire length of the base material.

Platinum nitrate, CeO₂-ZrO₂-based composite powder (that is, the OSC material), Al₂O₃ powder, barium sulfate, the binder, and the ion exchanged water were mixed to prepare a Pt-contained slurry. This Pt-contained slurry was poured into the base material and an unnecessary part was blown away with the blower; thus, coating was performed. By firing this in the electric furnace, an intermediate layer containing a Pt catalyst was formed on the lower layer. The coat amount of the intermediate layer was 0.85 g/L for Pt, 26 g/L for the OSC material, 26 g/L for the Al₂O₃ powder, 8 g/L for barium sulfate, and 1.2 g/L for the binder. The coat width of the intermediate layer was 100% of the entire length of the base material.

Rhodium nitrate, the CeO₂-ZrO₂-based composite powder (that is, the OSC material), the Al₂O₃ powder, the binder, and the ion exchanged water were mixed to prepare a Rh-contained slurry. This Rh-contained slurry was poured into the base material where the intermediate layer was formed and an unnecessary part was blown away with the blower; thus, coating was performed. By firing this in the electric furnace, an upper layer containing a Rh catalyst was formed on the intermediate layer. The coat amount of the upper layer was 0.14 g/L for Rh, 40 g/L for the OSC material, 70 g/L for the Al₂O₃ powder, and 0.7 g/L for the binder. The coat width of the upper layer was 100% of the entire length of the base material. In this manner, an exhaust gas purifying catalyst according to Example 2-1 was obtained.

### [Comparative Example 2-1]

An exhaust gas purifying catalyst according to Comparative Example 2-1 was obtained in a manner similar to Example 2-1 except that the lower layer containing the ALPO molecular sieve was not formed. Therefore, the exhaust gas purifying catalyst according to Comparative Example 2-1 had a two-layer structure including a lower layer containing the Pt catalyst and an upper layer containing the Rh catalyst.

### [Comparative Example 2-2]

An exhaust gas purifying catalyst according to Comparative Example 2-2 was manufactured in a manner similar to Example 2-1 except that BEA type zeolite was used instead of the ALPO molecular sieve manufactured in Example 1-1. Therefore, the zeolite used in the exhaust gas purifying catalyst according to Comparative Example 2-2 contained Si.

### [Comparative Example 2-3]

An exhaust gas purifying catalyst according to Comparative Example 2-3 was manufactured in a manner similar to Example 2-1 except that the ALPO molecular sieve manufactured in Comparative Example 1-1 was used instead of the ALPO molecular sieve manufactured in Example 1-1. The exhaust gas purifying catalyst according to Comparative Example 2-3 contained the ALPO molecular sieve having the general crystallite diameter.

### [Hydrothermal enduring process]

The rich gas and the lean gas were fed to the exhaust gas purifying catalyst according to each of Example 2-1 and Comparative Examples 2-1 to 2-3 for 10 hours at 900°C while these gases were alternately switched every 10 minutes. The rich gas had a composition of CO: 5%, water: 10%, and N₂: the rest and the lean gas had a composition of O₂: 2.5%, water: 10%, and N₂: the rest.

### [Evaluation of catalyst activity for HC]

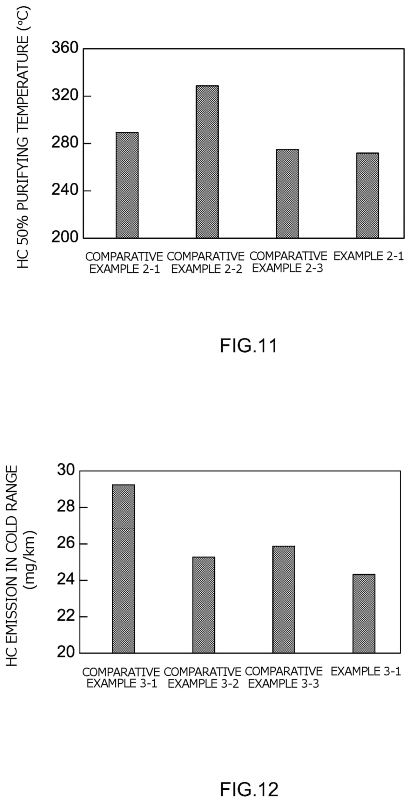

While a pretreatment gas A was fed to the exhaust gas purifying catalyst according to each of Example 2-1 and Comparative Examples 2-1 to 2-3 in which the hydrothermal process had been performed, the temperature was increased from 100°C to 500°C at 20 °C/min, and the temperature was kept at 500°C for five minutes. Next, the temperature was decreased to 100°C while an inert gas (N₂ gas) was fed. After the temperature became stable, the temperature was increased to 550°C at 50 °C/min while a reaction gas A was fed, and the temperature at which the HC purifying ratio of the reaction gas reached 50% (HC 50% purifying temperature: T50) was determined. It should be noted that the following gases were used as the pretreatment gas A and the reaction gas A. Fig. 11 is a graph showing the HC 50% purifying temperature in Example 2-1 and Comparative Examples 2-1 to 2-3.
Pretreatment gas A
A/F ratio: 14.6
C₃H₆: 2400 ppmC, C₃H₈: 600 ppmC, CO: 0.5%
NO: 800 ppm, H₂O: 10%, CO₂: 10%, O₂: 0.6%, N₂: the rest
Reaction gas A
A/F ratio: 14.5
C₃H₆: 1500 ppmC, C₁₀H₂₂: 1500 ppmC, H₂O: 3%,
CO₂: 10%, O₂: 0.3%, N₂: the rest

The results in Fig. 11 indicate that, by using the ALPO molecular sieve having the 12-membered ring as the HC adsorption material, the HC purifying performance after the hydrothermal enduring becomes high. In addition, it is understood that the exhaust gas purifying catalyst according to Example 2-1 in which the crystallite diameter of the ALPO molecular sieve was increased on purpose had the lower HC 50% purifying temperature and the higher HC purifying performance than the exhaust gas purifying catalyst according to Comparative Example 2-3 in which the ALPO molecular sieve with the general crystallite diameter was used. On the other hand, in the case of using the zeolite as the HC adsorption material, the HC purifying performance after the hydrothermal enduring was poor. This is because Si contained in the zeolite migrated to the catalyst layer in the hydrothermal enduring, which led to toxification of the catalyst metal.

### <Evaluation of HC purifying performance by vehicle test>

### [Example 3-1]

### [First catalyst]

A honeycomb base material (made of cordierite, diameter: 117 mm, and entire length: 100 mm) was prepared. Palladium nitrate, the CeO₂-ZrO₂-based composite powder (that is, the OSC material), the Al₂O₃ powder, barium sulfate, the binder, and the ion exchanged water were mixed to prepare a Pd-contained slurry. This Pd-contained slurry was poured into the base material and an unnecessary part was blown away with the blower; thus, coating was performed. By firing this in the electric furnace, a lower layer containing a Pd catalyst was formed on the base material. The coat amount of the lower layer was 2.0 g/L for Pd, 45 g/L for the OSC material, 72 g/L for the Al₂O₃ powder, 6 g/L for barium sulfate, and 2.4 g/L for the binder. The coat width of the lower layer was 100% of the entire length of the base material.

Rhodium nitrate, the CeO₂-ZrO₂-based composite powder (that is, the OSC material), the Al₂O₃ powder, the binder, and the ion exchanged water were mixed to prepare the Rh-contained slurry. This Rh-contained slurry was poured into the base material where the lower layer was formed and an unnecessary part was blown away with the blower; thus, coating was performed. By firing this in the electric furnace, an upper layer containing the Rh catalyst was formed on the lower layer. The coat amount of the upper layer was 0.14 g/L for Rh, 40 g/L for the OSC material, 70 g/L for the Al₂O₃ powder, and 0.7 g/L for the binder. The coat width of the upper layer was 100% of the entire length of the base material. Thus, the first catalyst was obtained.

### [Second catalyst]

A honeycomb base material (made of cordierite, diameter: 105.7 mm, and entire length: 74.7 mm) was prepared. The aforementioned ALPO molecular sieve manufactured in Example 1-1, the binder, and the ion exchanged water were mixed to prepare an ALPO-contained slurry. This ALPO-contained slurry was poured into the base material and an unnecessary part was blown away with the blower; thus, coating was performed. By firing this in the electric furnace, a lower layer containing the ALPO molecular sieve was formed on the base material. The coat amount of the lower layer was 50 g/L for ALPO and 8.1 g/L for the binder.

Platinum nitrate, the CeO₂-ZrO₂-based composite powder (that is, the OSC material), the Al₂O₃ powder, barium sulfate, the binder, and the ion exchanged water were mixed to prepare the Pt-contained slurry. This Pt-contained slurry was poured into the base material and an unnecessary part was blown away with the blower; thus, coating was performed. By firing this in the electric furnace, an intermediate layer containing the Pt catalyst was formed on the lower layer. The coat amount of the intermediate layer was 0.85 g/L for Pt, 26 g/L for the OSC material, 26 g/L for the Al₂O₃ powder, 8 g/L for barium sulfate, and 1.2 g/L for the binder.

Rhodium nitrate, the CeO₂-ZrO₂-based composite powder (that is, the OSC material), the Al₂O₃ powder, the binder, and the ion exchanged water were mixed to prepare the Rh-contained slurry. This Rh-contained slurry was poured into the base material where the intermediate layer was formed and an unnecessary part was blown away with the blower; thus, coating was performed. By firing this in the electric furnace, an upper layer containing the Rh catalyst was formed on the intermediate layer. The coat amount of the upper layer was 0.21 g/L for Rh, 50 g/L for the OSC material, 35 g/L for the Al₂O₃ powder, and 1.6 g/L for the binder. Thus, the second catalyst was obtained.

### [Vehicle test]

The first catalyst and the second catalyst were mounted as a catalyst system on a vehicle including a gasoline engine. At this time, the first catalyst was accommodated in a housing and attached to a position of a start-up catalyst and the second catalyst was accommodated in a housing and attached to a position of an underfloor catalyst. A THC meter was attached on a downstream side of the second catalyst. On a chassis dynamometer, this vehicle was driven in accordance with a WLTC mode, the THC emitted in a low phase (in the range of 0 s to 600 s in the WLTC mode) was integrated, and thus, the HC emission (mg/km) in the cold range was determined. The results are shown in Fig. 12.

### [Comparative Example 3-1]

A second catalyst was manufactured by the same method as that of Example 3-1 except that the layer containing the ALPO molecular sieve was not formed. A vehicle test was conducted by the same method as that of Example 3-1 except that this second catalyst was used. The results are shown in Fig. 12.

### [Comparative Example 3-2]

A second catalyst was manufactured by the same method as that of Example 3-1 except that BEA type zeolite was used instead of the aforementioned ALPO molecular sieve manufactured in Example 1-1. A vehicle test was conducted by the same method as that of Example 3-1 except that this second catalyst was used. The results are shown in Fig. 12.

### [Comparative Example 3-3]

A second catalyst was manufactured by the same method as that of Example 3-1 except that the aforementioned ALPO molecular sieve manufactured in Comparative Example 1-1 was used instead of the aforementioned ALPO molecular sieve manufactured in Example 1-1. A vehicle test was conducted by the same method as that of Example 3-1 except that this second catalyst was used. The results are shown in Fig. 12.

As the results in Fig. 12 also show that the HC emission was the minimum and therefore the HC purifying performance was the highest in Example 3-1 where the ALPO molecular sieve with a crystallite diameter of 360 Å or more was used. Based on Comparative Example 3-1 where the HC adsorption material was not used, the reduction of the emission in Comparative Example 3-1 where BEA type zeolite was used was 4 mg/km. On the other hand, the reduction of the emission in Example 3-1 was 5 mg/km. Therefore, in Example 3-1, the emission was able to be reduced by 25% compared to Comparative Example 3-1 where BEA type zeolite was used. In addition, in the vehicle test, the effect of improving the HC purifying performance by increasing the crystallite diameter of the ALPO molecular sieve appeared remarkably.

Although the embodiments of the present invention have been described above, each of the above-described embodiments is merely one example. The present invention can be carried out in other various modes. The present invention can be carried out based on the contents disclosed in this specification and technical common sense in the field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

## Claims

1. An exhaust gas purifying catalyst comprising:
a base material; and
an exhaust gas purifying layer provided on the base material, wherein
the exhaust gas purifying layer includes a catalyst metal and a molecular sieve that does not substantially contain Si as a hydrocarbon adsorption material,
the molecular sieve that does not substantially contain Si is an aluminophosphate molecular sieve including a 12-membered ring, and
a crystallite diameter of the aluminophosphate molecular sieve that is determined by X-ray diffraction measurement is 360 Å to 700 Å.

2. The exhaust gas purifying catalyst according to claim 1, wherein the crystallite diameter of the aluminophosphate molecular sieve is 360 Å to 400 Å.

3. The exhaust gas purifying catalyst according to claim 1, wherein the crystallite diameter of the aluminophosphate molecular sieve is 450 Å to 600 Å.

4. The exhaust gas purifying catalyst according to claim 1, wherein a framework structure of the aluminophosphate molecular sieve is an AFI type.

5. The exhaust gas purifying catalyst according to claim 1, wherein the exhaust gas purifying layer includes an HC adsorption layer containing the molecular sieve that does not substantially contain Si, and a catalyst layer containing the catalyst metal.

6. The exhaust gas purifying catalyst according to claim 5, wherein the HC adsorption layer and the catalyst layer are stacked and the HC adsorption layer exists on a side of the base material relative to the catalyst layer.

7. The exhaust gas purifying catalyst according to claim 6, wherein
a first part catalyst layer and a second part catalyst layer are stacked in the catalyst layer,
the first part catalyst layer exists on the side of the base material relative to the second part catalyst layer,
each of the first part catalyst layer and the second part catalyst layer contains the catalyst metal,
the first part catalyst layer includes an oxidation catalyst as the catalyst metal, and
the second part catalyst layer includes a reduction catalyst as the catalyst metal.

8. A hydrocarbon adsorption material comprising an aluminophosphate molecular sieve, wherein
the aluminophosphate molecular sieve includes a 12-membered ring, and
a crystallite diameter of the aluminophosphate molecular sieve that is determined by X-ray diffraction measurement is 360 Å to 700 Å.
